(19) Europäisches Patentamt / European Patent Office / Office européen des brevets

(11) **EP 2 870 868 B1**

(12) **EUROPEAN PATENT SPECIFICATION**

(45) Date of publication and mention
of the grant of the patent:
**07.12.2016 Bulletin 2016/49**

(21) Application number: **13813621.3**

(22) Date of filing: **20.06.2013**

(51) Int Cl.:
***A01K 1/01*** *(2006.01)*    ***A01K 1/015*** *(2006.01)*

(86) International application number:
**PCT/JP2013/067008**

(87) International publication number:
**WO 2014/007070 (09.01.2014 Gazette 2014/02)**

(54) **SHEET FOR PETS**

FOLIE FÜR HAUSTIERE

FEUILLE POUR ANIMAUX DOMESTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.07.2012 JP 2012153082**

(43) Date of publication of application:
**13.05.2015 Bulletin 2015/20**

(73) Proprietor: **Unicharm Corporation
Ehime 799-0111 (JP)**

(72) Inventors:
• **TAKAGI, Chiyo
Kanonji-shi, Kagawa 769-1602 (JP)**

• **IKEGAMI, Takeshi
Kanonji-shi, Kagawa 769-1602 (JP)**

(74) Representative: **Peter, Julian
Staeger & Sperling
Partnerschaftsgesellschaft mbB
Sonnenstrasse 19
80331 München (DE)**

(56) References cited:
**WO-A1-2011/121682     JP-A- 2005 198 598
JP-A- 2006 238 744     JP-A- 2008 043 243
JP-A- 2011 205 984**

## Description

TECHNICAL FIELD

The present invention relates to a sheet for pets which is used to dispose of excrement of pets such as dogs and cats, or more particularly to a sheet for pets which can prevent diffusion of excrement in a sheet surface.

BACKGROUND ART

Sheets for pets have been used to dispose of excrement (especially urine) of pets such as dogs and cats. Pets tend to hate excreting on a wet place. Further, it is not known where pets excrete on a pet sheet. Therefore, in order to provide a pet sheet on which pets can excrete several times, it is necessary to prevent excrement excreted on the pet sheet from diffusing in the sheet surface (to narrow the diffusion area).
As a pet sheet which can prevent excrement from diffusing in a sheet surface, for example, a pet sheet disclosed in patent document 1 is well known.
The pet sheet disclosed in patent document 1 has a liquid-permeable top sheet, a liquid-impermeable back sheet, and an absorber that is disposed between the top sheet and the back sheet. The absorber includes an absorbent layer, a top side covering sheet disposed on a side of the absorbent layer facing the top sheet, and a back side covering sheet disposed on a side of the absorbent layer facing the back sheet.
The absorbent layer includes a first absorbent layer formed of hydrophilic fibers, and a second absorbent layer formed of absorbent resin and disposed on a side of the first absorbent layer facing the top side covering sheet, and a third absorbent layer formed of absorbent resin and disposed on a side of the first absorbent layer facing the back side covering sheet.
In the pet sheet disclosed in patent document 1, excrement (liquid such as urine) is absorbed by the second absorbent layer in the surface of the absorbent layer, and then the remaining excrement which could not be absorbed by the second absorbent layer is absorbed by the third absorbent layer. In this manner, excrement is prevented from diffusing in the sheet surface.

PRIOR ART DOCUMENT

PATENT DOCUMENT

Patent Document 1: JP H11-332413 A

Also Patent Document 2: WO-2011/121682 discloses a similar pet sheet.

SUMMARY OF THE INVENTION

PROBLEM TO BE SOLVED BY THE INVENTION

Inventors have intensively studied on a technique for preventing excrement absorbed in an absorbent layer from returning to the sheet surface side and diffusing in the sheet surface. As a result, they found that excrement absorbed in the absorbent layer can be prevented from returning to the sheet surface side also by appropriately selecting a back side covering sheet disposed on a side of an absorbent layer facing a back sheet.
Accordingly, it is an object of the present invention to provide a novel technique for preventing excrement from diffusing in a sheet surface by preventing excrement absorbed in an absorbent layer from returning to the sheet surface side.

MEANS FOR SOLVING THE PROBLEM

A sheet for pets according to the present invention, as defined in claim 1, has a liquid-permeable top sheet, a liquid-impermeable back sheet, and an absorber that is disposed between the top sheet and the back sheet and absorbs excrement which has penetrated through the top sheet. The sheet for pets according to this invention is configured such that the top sheet receives excrement of pets with the back sheet placed on an intended place such as floor. The absorber includes an absorbent layer, a top side covering sheet disposed on a side of the absorbent layer facing the top sheet, and a back side covering sheet disposed on a side of the absorbent layer facing the back sheet. The absorbent layer is formed of hydrophilic fibers, preferably hydrophilic fibers and absorbent resin.

In this invention, the back side covering sheet is provided with hydrophobicity. Specifically, the back side covering sheet is formed of either one of a sheet formed by hydrophobizing hydrophilic fibers, a sheet formed by hydrophilizing hydrophobic fibers and a sheet of mixture of hydrophilic fibers and hydrophobic fibers.

As the hydrophilic fibers, for example, pulp or rayon is used. As a method of hydrophobizing hydrophilic fibers, for example, a method of spraying a hydrophobizing agent is used. As the hydrophobic fibers, for example, polypropylene, polyethylene or polyethylene terephthalate is used. As a method of hydrophilizing hydrophobic fibers, for example, a method of kneading a hydrophilizing agent into fibers, or a method of applying a hydrophilizing agent is used. When mixing hydrophilic fibers and hydrophobic fibers, the fibers are mixed in an appropriate ratio to obtain desired characteristics.

In this invention, the back side covering sheet has hydrophobicity so that excrement which has penetrated into the back side covering sheet from the absorbent layer is prevented from diffusing along the back side covering sheet. Thus, the excrement is prevented from penetrating the absorbent layer from the back side covering sheet to the sheet surface side, so that the excrement is prevented from diffusing in the sheet surface.

In another aspect of the present invention, the back side covering sheet has a lower liquid diffusibility than the top side covering sheet. Liquid diffusibility of the covering sheet is expressed, for example, by the liquid diffusion area which is measured five minutes after water of 100 μl is dropped onto the sheet.

By setting the liquid diffusibility (e.g. liquid diffusion area) of the back side covering sheet to be lower than that of the top side covering sheet, excrement absorbed in the absorber layer can be prevented from spreading along the back side covering sheet and returning to the sheet surface side, and consequently from diffusing in the sheet surface. The greater the difference of liquid diffusibility between the back side covering sheet and the top side covering sheet, the greater the effect of preventing excrement absorbed in the absorber layer from spreading along the back side covering sheet and returning to the sheet surface side.

In this aspect, by provision of the back side covering sheet having a lower liquid diffusibility than the top side covering sheet, excrement which has reached the back side covering sheet can be prevented from diffusing. As a result, the excrement which has diffused in the back side covering sheet can be prevented from returning to the sheet surface side and thus from diffusing in the sheet surface.

In another aspect of the present invention, the back side covering sheet is formed of hydrophobized paper.

In another aspect of the present invention, a water repellent is used for the hydrophobizing.

In another aspect of the present invention, the back side covering sheet is formed of nonwoven fabric including long fibers.

In another aspect of the present invention, the back side covering sheet is formed of nonwoven fabric including long fibers and melt-blow fibers.

In another aspect of the present invention, the absorbent layer is formed of hydrophilic fibers and absorbent resin.

In another aspect of the present invention, the absorbent layer has a first absorbent layer formed of hydrophilic fibers, and a second absorbent layer formed of absorbent resin.

In another aspect of the present invention, the second absorbent layer is disposed on a side of the first absorbent layer facing the top side covering sheet.

In another aspect of the present invention, pulp is used as the hydrophilic fibers.

In another aspect of the present invention, the back side covering sheet has a liquid diffusion area of 20 cm$^2$ or smaller after five minutes from drop of water of 100 μl.

In another aspect of the present invention, the absorbent layer and the back side covering sheet are entirely bonded together by a heat sealable adhesive.

In another aspect of the present invention, the back side covering sheet and the back sheet are entirely bonded together by a heat sealable adhesive.

EFFECT OF THE INVENTION

According to the present invention, excrement can be prevented from diffusing in a sheet surface by preventing excrement absorbed in an absorbent layer from returning to the sheet surface side.

BRIEF DESCRIPTION OF THE DRAWINGS

FIG. 1 is a perspective view showing a sheet for pets according to the present invention.
FIG. 2 is a sectional view taken along line II-II in FIG. 1.
FIG. 3 is a view for illustrating operation of a sheet for pets according to an embodiment of the invention.

FIG. 4 is a sectional view showing another embodiment of the invention.

FIG. 5 is a view for illustrating operation of a prior art sheet for pets.

REPRESENTATIVE EMBODIMENTS FOR CARRYING OUT THE INVENTION

Embodiments of the present invention are now described with reference to the accompanying drawings.

The detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention.

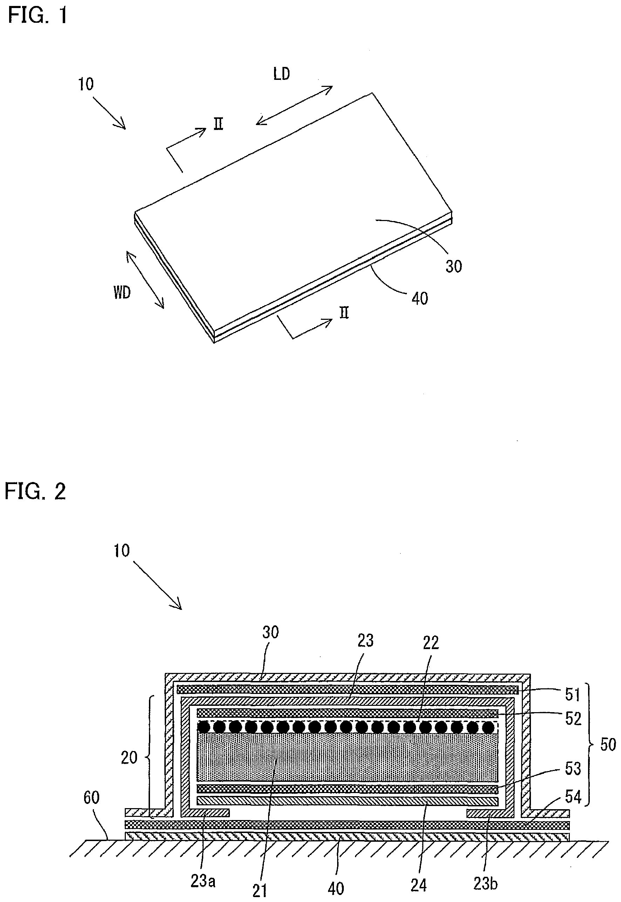

A pet sheet 10 according to an embodiment of the invention is shown in FIGS. 1 and 2. FIG. 1 is a perspective view showing the pet sheet 10 of this embodiment, and FIG. 2 is a sectional view taken along line II-II in FIG. 1.

As shown in FIG. 1, the pet sheet 10 has a rectangular shape having a long side along a longitudinal direction LD and a short side along a width direction WD. The pet sheet 10 may also be formed into various other shapes.

The pet sheet 10 has an absorber 20, a top sheet 30 and a back sheet 40. The absorber 20 is disposed between the top sheet 30 and the back sheet 40 and covered by the top sheet 30 and the back sheet 40. The pet sheet 10 is placed on an intended place (e.g. floor 60) such that the top sheet 30 receives excrement. Specifically, the back sheet 40, the absorber 20 and the top sheet 30 are stacked one on another in the vertical direction.

The top sheet 30 has liquid permeability to allow penetration of liquid (such as urine) contained in excrement. It is sufficient for the top sheet 30 to have liquid permeability, and the top sheet 30 may be formed, for example, of nonwoven fabric, such as thermal bond nonwoven fabric, point-bond nonwoven fabric, air-through nonwoven fabric, spun-lace nonwoven fabric and spun-bond nonwoven fabric, or perforated film.

The back sheet 40 has liquid impermeability or repellency to inhibit or prevent penetration of liquid contained in excrement. It is sufficient for the back sheet 40 to have liquid impermeability, and the back sheet 40 may be formed, for example, of resin film such as a film of polyethylene, polypropylene or polyethylene terephthalate. For example, a polyethylene film having a basis weight of 17 $g/m^2$ may be used. Alternatively, nonwoven fabric with a water repellent applied thereto may also be used as the back sheet 40. The "$g/m^2$" here represents a gram per square meter which measures basis weight.

The top sheet 30 and the back sheet 40 are shaped to cover the absorber 20 and are bonded together at their peripheral edges while covering the absorber 20.

The absorber 20 includes an absorbent layer, a top side covering sheet 23 and a back side covering sheet 24.

The absorbent layer has a first absorbent layer (also referred to as an "absorber core") 21 formed of hydrophilic fibers and a second absorbent layer (also referred to as a "dispersed layer") 22 formed of absorbent resin. The second absorbent layer 22 is disposed on a side (upper side) of the first absorbent layer 21 facing the top sheet 30.

The first absorbent layer 21 is typically formed by stacking hydrophilic fibers so as to have a basis weight of about 60 $g/m^2$. As the hydrophilic fibers, for example, fluff pulp may be used.

The second absorbent layer 22 is typically formed by spraying absorbent resin onto an upper surface of the first absorbent layer 21 (facing the top sheet 30) so as to have a basis weight of 39 $g/m^2$. As the absorbent resin, for example, highly absorbent polymer (also referred to as "SAP") may be used. When the absorbent resin is uniformly sprayed onto the upper surface of the first absorbent layer 21 formed of hydrophilic fibers, the absorbent resin may penetrate between hydrophilic fibers and the first and second absorbent layers 21, 22 may not be completely separated from each other.

The absorbent layer is disposed between the top side covering sheet 23 and the back side covering sheet 24 and is covered by the covering sheets 23, 24. The top side covering sheet 23 is disposed on a side (upper side) of the absorbent layer facing the top sheet 30, and the back side covering sheet 24 is disposed on a side (lower side) of the absorbent layer facing the back sheet 40.

The top side covering sheet 23 is typically formed of a tissue of conifer pulp (e.g. a tissue having a basis weight of 12 to 25 $g/m^2$). The back side covering sheet 24 will be described below.

In this embodiment, in order to wrap the absorbent layer with the top side covering sheet 23 and the back side covering sheet 24, both edges 23a, 23b of the top side covering sheet 23 are bent and disposed on a lower side (facing the back sheet 40) of edges of the back side covering sheet 24.

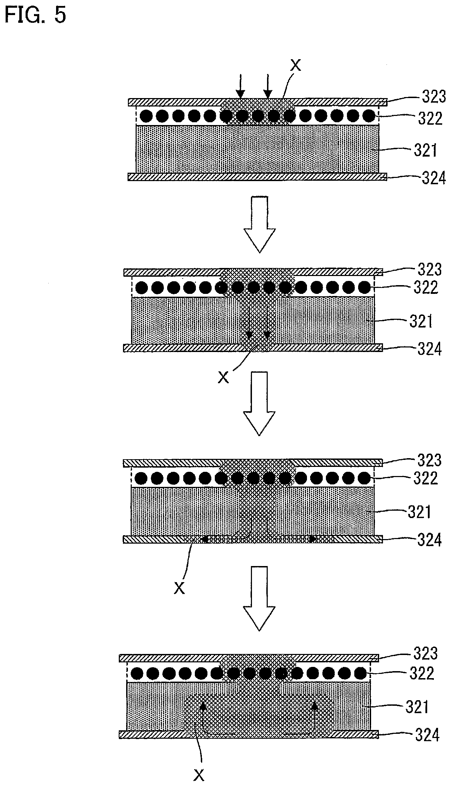

Operation of a sheet for pets where the same sheet as the top side covering sheet 23 is used as the back side covering sheet 24 is now described with reference to FIG. 5.

(1) When a pet excretes on the pet sheet, excrement (urine) X penetrates through a top sheet and a top side covering sheet 323 and is then first absorbed by absorbent resin having a fast absorption speed in a second absorbent layer 322.

(2) Excrement X which could not be absorbed by the absorbent resin of the second absorbent layer 322 penetrates into a first absorbent layer 321 and reaches a back side covering sheet 324.

(3) In the back side covering sheet 324 which has a higher density than the absorbent layer (the first absorbent layer 321, the second absorbent layer 322), the excrement X which reached the back side covering sheet 324 spreads (diffuses) along the back side covering sheet 324 by capillary action.

(4) The excrement X which spread (diffused) in the back side covering sheet 324 is absorbed again by the absorbent layer (the first absorbent layer 321, the second absorbent layer 322) and reaches the top sheet. Consequently, the excrement X diffuses in the sheet surface.

As described above, since pets hate excreting on a wet place, if excrement diffuses in a sheet surface, the number of times of excreting on one sheet decreases. Further, if excrement diffuses in the sheet surface, excrement may leak out through edges of the sheet. Furthermore, if a pet steps on the sheet surface in which excrement has diffused, paws of the pet get wet, and if the pet runs around a house with the wet paws, the entire house may be contaminated.

The pet sheet disclosed in patent document 1 has a sheet formed of absorbent resin between an absorbent layer formed of hydrophilic fibers and a back side covering sheet.

In this embodiment, diffusion of excrement in the back side covering sheet 24 is prevented by using a different sheet from the top side covering sheet 23 as the back side covering sheet 24. In this embodiment, a hydrophobic sheet is used as the back side covering sheet 24.

The back side covering sheet 24 is a sheet formed by hydrophobizing hydrophilic fibers, a sheet formed by hydrophilizing hydrophobic fibers, or a sheet of mixture of hydrophilic fibers and hydrophobic fibers.

As the hydrophilic fibers, for example, pulp or rayon is used. As a method of hydrophobizing hydrophilic fibers, for example, a method of spraying a hydrophobizing agent is used. As the hydrophobizing agent, for example, a water repellent (surfactant) such as silicon is used.

As the hydrophobic fibers, for example, polypropylene, polyethylene or polyethylene terephthalate is used. As a method of hydrophilizing hydrophobic fibers, for example, a method of kneading a hydrophilizing agent into fibers, or a method of applying a hydrophilizing agent is used.

When mixing hydrophilic fibers and hydrophobic fibers, the fibers are mixed in an appropriate ratio to obtain desired characteristics.

Further, the back side covering sheet 24 is configured to have a lower liquid diffusibility than the top side covering sheet 23.

The liquid diffusibility of the covering sheets are measured as follows.

(1) A sheet is stretched over a container (beaker) of 10 cm in diameter and secured with a rubber ring.

(2) Water of 100 μl is dropped onto a middle of the sheet from 10 mm above.

(3) Liquid diffusion (liquid diffusion area) on the sheet is measured at the time of elapse of one minute and at the time of elapse of five minutes.

The liquid diffusion area can be directly measured, or it can also be calculated from the measurements. For example, the diffusion length in the MD direction (machine direction) and the diffusion length in the CD direction (cross direction) are measured. Then, the liquid diffusion area ($cm^2$) is calculated by using the measured diffusion lengths in the MD direction and the CD direction and the following formula.

$$[(\text{MD direction diffusion length}/2) \times (\text{CD direction diffusion length}/2) \times 3.14]$$

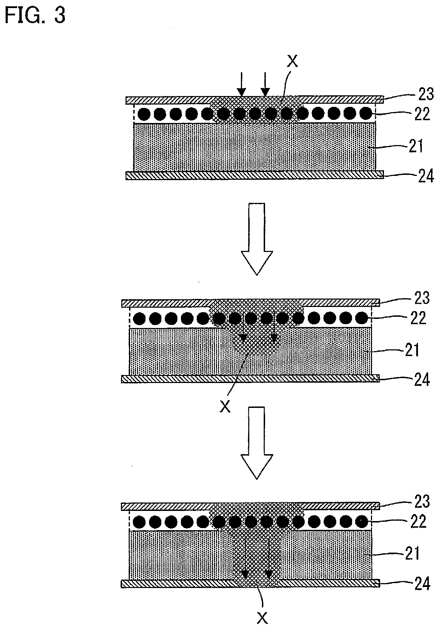

Operation of the pet sheet according to this embodiment is now explained with reference to FIG. 3

(1) When a pet excretes on the pet sheet 10, excrement (urine) X penetrates through the top sheet 30 and the top side covering sheet 23 and is then first absorbed by absorbent resin having a high absorption speed in the second absorbent layer 22.

(2) Excrement X which could not be absorbed by the absorbent resin of the second absorbent layer 22 penetrates into the first absorbent layer 21.

(3) The excrement X further penetrates and reaches the back side covering sheet 24. In this embodiment, the back side covering sheet 24 is configured to have a lower liquid diffusibility than the top side covering sheet 23. Therefore, the excrement X which reached the back side covering sheet 24 is prevented from spreading (diffusing) in the back side covering sheet 24. Then, in this state, the absorbent resin forming the second absorbent layer 22 gradually absorbs the excrement X. Thus, the excrement X which reached the back side covering sheet 24 can be prevented from returning to the sheet surface side and diffusing in the sheet surface.

As described above, by provision of the back side covering sheet 24 configured to have a lower liquid diffusibility (e.g. liquid diffusion area) than the top side covering sheet 23, excrement absorbed in the absorbent layer can be prevented from diffusing along the back side covering sheet 24 and returning to the sheet surface side. Consequently, the excrement is prevented from diffusing in the sheet surface. Further, by provision of the back side covering sheet 24 configured to have a lower liquid diffusibility (e.g. liquid diffusion area) than the top side covering sheet 23, excrement absorbed in the absorbent layer can be prevented from diffusing along the back side covering sheet 24 (having a diffusion preventing effect). The greater the difference of liquid diffusibility between the back side covering sheet 24 and the top side covering sheet 23, the greater the diffusion preventing effect.

When an ordinary top side covering sheet is used as the top side covering sheet 23, the liquid diffusibility of the back side covering sheet 24 can be set lower than that of the top side covering sheet 23 by setting the liquid diffusion area of the back side covering sheet 24 to 20 cm$^2$ or smaller.

By preventing excrement X which has reached the back side covering sheet 24 from spreading (diffusing) in the back side covering sheet 24, the excrement X collects in one area. In the case of an absorbent sheet which is worn on a user's body, if excrement X collects in one area, the excrement X is kept in contact with the user's body, which may cause itch or rash on the user's skin. Therefore, such a technique has not been used for absorbent sheets of the type which is worn on a user's body.

On the other hand, the sheet for pets is not worn on the body and is horizontally placed in use (rarely used in an inclined state). Further, it is particularly important to note that pets tend not to excrete on the same (once used) place again and not to excrete on a wet place.

Therefore, in order to increase the number of times of excretion on one sheet, it is more effective to prevent diffusion of excrement in the sheet surface than to prevent leakage of excrement.

If an embossing method is used as a bonding method, a concave-convex part is formed in the bonded region, and forms a part having a high fiber density (high density part) and a part having a low fiber density (low density part) in the bonded region. In this case, excrement spreads (diffuses) along the high density part by capillary action.

When excrement diffuses along a bonded region in which the absorbent layer (the first absorbent layer 21) and the back side covering sheet 24 are bonded and along a bonded region in which the back side covering sheet 24 and the back sheet 40 are bonded, the excrement returns to the sheet surface side, resulting in diffusing in the sheet surface.

Therefore, in this embodiment, the absorbent layer (the first absorbent layer 21) and the back side covering sheet 24, and the back side covering sheet 24 and the back sheet 40 are entirely bonded together (i.e. the absorbent layer and the back sheet 40 are entirely bonded to the back side covering sheet 24) by using a heat sealable adhesive (hot-melt adhesive). The hot-melt adhesive is liquefied by heating and melting and solidified by cooling to form a bonded state. A well-known hot-melt adhesive can be used as the hot-melt adhesive.

In this embodiment, the top sheet 110 and the top side covering sheet 23, and the top side covering sheet 23 and the absorbent layer (the second absorbent layer 22) are also entirely bonded together by using a hot-melt adhesive.

The manner of being "entirely bonded together" means the manner in which the entire surfaces of the absorbent layer and the back side covering sheet 24 (the back side covering sheet 24 and the back sheet 40) facing each other in the stacking direction (vertical direction) are bonded together. The manner of "entirely bonding together" includes the manner of evenly applying an adhesive over the entire surface of at least one of the surfaces facing each other in the stacking direction (vertical direction), and the manner of applying an adhesive over the entire surface of at least one of the surfaces in a discontinuous pattern such as a spiral, lattice-like, striped or dotted pattern.

A bonded part 50 or bonded parts 51, 52, 53, 54 shown in FIG. 2 are parts in which the top sheet 30 and the top side covering sheet 23 are bonded, the top side covering sheet 23 and the absorbent layer (the second absorbent layer 22) are bonded, the absorbent layer (the first absorbent layer 21) and the back side covering sheet 24 are bonded, and the back side covering sheet 24 and the back sheet 40 are bonded, respectively, by using a hot-melt adhesive.

The absorber can be securely fixed between the top sheet 30 and the back sheet 40 by entirely bonding using a heat sealable adhesive, so that the absorber can be prevented from losing shape.

In this embodiment, the absorbent resin is provided on the top of the first absorbent layer 21 formed of hydrophilic fibers, but it may be provided inside the first absorbent layer.

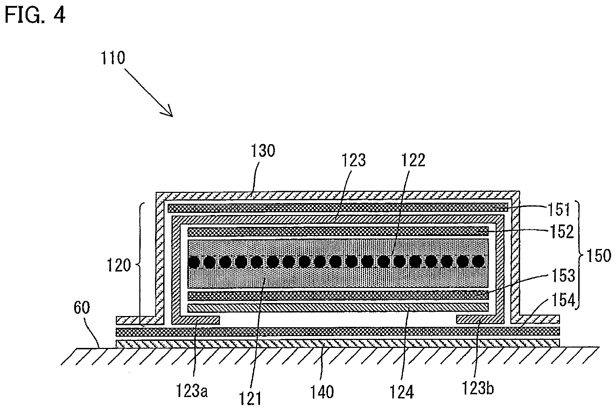

FIG. 4 is a sectional view of a pet sheet 110 according to another embodiment of the present invention.

The pet sheet 110 according to this embodiment is different only in the structure of the absorbent layer of an absorber 120 from the pet sheet 10, and in the other points, it has the same structure as the pet sheet 10. Therefore, only the structure of the absorber 120 is now explained.

The absorber 120 has an absorbent layer 121, a top side covering sheet 123 and a back side covering sheet 124.

The absorbent layer 121 is formed of hydrophilic fibers, and a second absorbent layer 122 formed of absorbent resin is disposed in the first absorbent layer 121. As the hydrophilic fibers forming the absorbent layer 121, the same fibers as the hydrophilic fibers forming the above-described first absorbent layer 21 can be used. Further, as the absorbent resin forming the second absorbent layer 122, the same resin as the absorbent resin forming the above-described second absorbent layer 22 can be used.

The pet sheet 110 according to this embodiment has the same effect as the above-described pet sheet 10.

The present invention is not limited to the above-described embodiments, but rather, may be added to, changed, replaced with alternatives or otherwise modified.

In the embodiments, the absorbent layer has the first absorbent layer formed of hydrophilic fibers such as pulp, and the second absorbent layer formed of absorbent resin (SAP), but it may have only the first absorbent layer.

The position of the second absorbent layer with respect to the first absorbent layer and the number of the second absorbent layers can be appropriately selected. For example, the second absorbent layers can be disposed on and underneath the first absorbent layer, or on and inside the first absorbent layer.

The top sheet and the top side covering sheet, the top side covering sheet and the absorbent layer, the absorbent layer and the back side covering sheet, and the back side covering sheet and the back sheet are bonded together by using the heat sealable adhesive (hot-melt adhesive). In order to prevent excrement from diffusing along the bonded parts, however, it is only necessary that at least the absorbent layer and the back side covering sheet, and the back side covering sheet and the back sheet are bonded together by using the heat sealable adhesive.

As the bonding method, a bonding method other than the method using the heat sealable adhesive (hot-melt adhesive) can also be used.

Description of the Numerals

| | |
|---|---|
| 10, 110 | pet sheet |
| 20, 120 | absorber |
| 21, 121, 321 | first absorbent layer |
| 22, 122, 322 | second absorbent layer |
| 23, 123, 323 | top side covering sheet |
| 24, 124, 324 | back side covering sheet |
| 30, 130 | top sheet |
| 40, 140 | back sheet |
| 50, 51, 52, 53, 54, 150, 151, 152, 153 | bonded part |
| 60 | floor (intended place) |

## Claims

1. A sheet (10) top sheet (30), for pets, comprising a liquid-permeable top sheet (30), a liquid-impermeable back sheet (40), and an absorber that is disposed between the top sheet and the back sheet and absorbs excrement which has penetrated through the top sheet, the sheet (10) for pets being configured such that the top sheet receives excrement of pets with the back sheet placed on an intended place, wherein:

   the absorber includes an absorbent layer, a top side covering sheet (23) disposed on a side of the absorbent layer facing the top sheet, and a back side covering sheet (24) disposed on a side of the absorbent layer facing the back sheet, and
   the back side covering sheet comprises either one of a sheet formed by hydrophobizing hydrophilic fibers, a sheet formed by hydrophilizing hydrophobic fibers and a sheet of mixture of hydrophilic fibers and hydrophobic fibers,

   **characterized in that**
   the back side covering sheet has a lower liquid diffusibility than the top side covering sheet.

2. The sheet (10) for pets as defined in claim 1, wherein the back side covering sheet (24) comprises hydrophobized paper.

3. The sheet (10) for pets as defined in any one of claims 1 to 2, wherein a water repellent is used for the hydrophobizing.

4. The sheet (10) for pets as defined in claim 1, wherein the back side covering sheet (24) comprises nonwoven fabric including long fibers.

5. The Z sheet (10) for pets as defined in claim 4, wherein the back side covering sheet (24) comprises nonwoven fabric including long fibers and melt-blow fibers.

6. The sheet (10) for pets as defined in any one of claims 1 to 5, wherein the absorbent layer comprises hydrophilic fibers and absorbent resin.

7. The sheet (10) for pets as defined in claim 6, wherein the absorbent layer includes a first absorbent layer (21) formed of hydrophilic fibers, and a second absorbent layer (22) formed of absorbent resin.

8. The sheet (10) for pets as defined in claim 7, wherein the second absorbent layer (22) is disposed on a side of the first absorbent layer (21) facing the top side covering sheet (23).

9. The Z r sheet (10) for pets as defined in any one of claims 6 to 8, wherein pulp is used as the hydrophilic fibers.

10. The sheet (10) for pets as defined in any one of claims 1 to 9, wherein the back side covering sheet (24) has a liquid diffusion area of 20 cm$^2$ or smaller after five minutes from drop of water of 100 $\mu$l.

11. The sheet (10) for pets as defined in any one of claims 1 to 10, wherein the absorbent layer and they back side covering sheet (24) are entirely bonded together by a heat sealable adhesive (53).

12. The sheet (10) for pets as defined in any one of claims 1 to 11, wherein the back side covering sheet (24) and the back sheet (40) are entirely bonded together by a heat sealable adhesive (54).


**Patentansprüche**

1. Lage (10) für Haustiere, umfassend eine flüssigkeitsdurchlässige Oberlage (30), eine flüssigkeitsundurchlässige Unterlage (40), und einen Absorber, der zwischen der Oberlage und der Unterlage angeordnet ist und Exkremente absorbiert, die durch die Oberlage durchgedrungen sind, wobei die Lage (10) für Haustiere so ausgebildet ist, dass die Oberlage Exkremente von Haustieren mit der auf einer vorbestimmten Stelle angeordneten Unterlage aufnimmt, wobei:

   der Absorber eine Absorberschicht, eine oberseitenabdeckende Lage (23), die auf einer der Oberlage zugewandten Seite der Absorberschicht angeordnet ist, und eine unterseitenabdeckende Lage (24), die auf der Unterlage zugewandten einer Seite der Absorberschicht angeordnet ist, umfasst und
   die unterseitenabdeckende Lage umfasst entweder eine durch hydrophobierende hydrophile Fasern gebildete Lage, eine durch hydrophilisierende hydrophobe Fasern gebildete Lage und eine durch eine Mischung aus hydrophilen Fasern und hydrophoben Fasern gebildete Lage,

   **dadurch gekennzeichnet, dass**
   die unterseitenabdeckende Lage ein niedrigeres Flüssigkeitsdifussionsvermögen hat als die oberseitenabdeckende Lage.

2. Lage (10) für Haustiere nach Anspruch 1, wobei die unterseitenabdeckende Lage (24) hydrophobiertes Papier umfasst.

3. Lage (10) für Haustiere nach einem der Ansprüche 1 bis 2, wobei ein Wasserabweiser für das Hydrophobieren verwendet wird.

4. Lage (10) für Haustiere nach Anspruch 1, wobei die unterseitenabdeckende Lage (24) einen Vliesstoff mit Langfasern umfasst.

5. Lage (10) für Haustiere nach Anspruch 4, wobei die unterseitenabdeckende Lage (24) einen Vliesstoff mit Langfasern und heißluftgeblasenen Fasern umfasst.

6. Lage (10) für Haustiere nach einem der Ansprüche 1 bis 5, wobei die Absorberschicht hydrophile Fasern und absorbierendes Harz umfasst.

**7.** Lage (10) für Haustiere nach Anspruch 6, wobei die Absorberschicht eine aus hydrophilen Fasern gebildete erste Absorberschicht (21) und eine aus absorbierendem Harz gebildete zweite Absorberschicht (22) umfasst.

**8.** Lage (10) für Haustiere nach Anspruch 7, wobei die zweite Absorberschicht (22) auf einer Seite der ersten Absorberschicht (21) der oberseitenabdeckenden Lage (23) zugewandt angeordnet ist.

**9.** Lage (10) für Haustiere nach einem der Ansprüche 6 bis 8, wobei Zellstoff als hydrophile Fasern verwendet ist.

**10.** Lage (10) für Haustiere nach einem der Ansprüche 1 bis 9, wobei die unterseitenabdeckende Lage (24) fünf Minuten nach dem Tropfen von 100 $\mu$l Wasser einen Flüssigkeitsdiffusionsbereich von 20 cm$^2$ oder kleiner hat.

**11.** Lage (10) für Haustiere nach einem der Ansprüche 1 bis 10, wobei die Absorberschicht und die unterseitenabdeckende Lage (24) durch einen heißversiegelnden Klebstoff (53) vollständig miteinander verklebt sind.

**12.** Lage (10) für Haustiere nach einem der Ansprüche 1 bis 11, wobei die unterseitenabdeckende Lage (24) und die Unterlage (40) durch einen heißversiegelnden Klebstoff (54) vollständig miteinander verklebt sind.

## Revendications

**1.** Feuille (10) pour animaux de compagnie, comprenant une feuille supérieure perméable aux liquides (30), une feuille arrière imperméable aux liquides (40) et un absorbant qui est disposé entre la feuille supérieure et la feuille arrière et absorbe les excréments qui ont pénétré à travers la feuille supérieure, la feuille (10) pour animaux de compagnie étant configurée de telle sorte que la feuille supérieure reçoit les excréments des animaux de compagnie, la feuille arrière étant placée sur un endroit prévu, dans laquelle :

l'absorbant comprend une couche absorbante, une feuille de couverture du côté supérieur (23) disposée sur un côté de la couche absorbante faisant face à la feuille supérieure et une feuille de couverture du côté arrière (24) disposée sur un côté de la couche absorbante faisant face à la feuille arrière, et
la feuille de couverture du côté arrière comprend une feuille parmi une feuille formée par des fibres hydrophiles, une feuille formée par hydrophilisation des fibres hydrophobes et une feuille d'un mélange de fibres hydrophiles et de fibres hydrophobes,

**caractérisé en ce que**
la feuille de couverture du côté arrière a une diffusibilité des liquides inférieure à celle de la feuille de couverture du côté supérieur.

**2.** Feuille (10) pour animaux de compagnie selon la revendication 1, dans laquelle la feuille de couverture du côté arrière (24) comprend du papier hydrophobisé.

**3.** Feuille (10) pour les animaux de compagnie selon l'une quelconque des revendications 1 à 2, dans laquelle un hydrofuge est utilisé pour l'hydrophobie.

**4.** Feuille (10) pour animaux de compagnie selon la revendication 1, dans laquelle la feuille de couverture du côté arrière (24) comprend un tissu non tissé incluant des fibres longues.

**5.** Feuille (10) pour animaux de compagnie selon la revendication 4, dans laquelle la feuille de couverture du côté arrière (24) comprend un tissu non tissé incluant des fibres longues et des fibres obtenues par fusion-soufflage.

**6.** Feuille (10) pour animaux de compagnie selon l'une quelconque des revendications 1 à 5, dans laquelle la couche absorbante comprend des fibres hydrophiles et de la résine absorbante.

**7.** Feuille (10) pour animaux de compagnie selon la revendication 6, dans laquelle la couche absorbante comprend une première couche absorbante (21) formée de fibres hydrophiles, et une seconde couche absorbante (22) formée d'une résine absorbante.

**8.** Feuille (10) pour animaux de compagnie selon la revendication 7, dans laquelle la seconde couche absorbante (22) est disposée sur un côté de la première couche absorbante (21) faisant face à la feuille de couverture du côté supérieur (23).

**9.** Feuille (10) pour animaux de compagnie selon l'une quelconque des revendications 6 à 8, dans laquelle une pâte est utilisée en tant que fibres hydrophiles.

**10.** Feuille (10) pour animaux de compagnie selon l'une quelconque des revendications 1 à 9, dans laquelle la feuille de couverture du côté arrière (24) comporte une zone de diffusion du liquide inférieure ou égale à 20 cm$^2$ cinq minutes après avoir fait tomber 100 $\mu$l d'eau sur la feuille.

**11.** Feuille (10) pour animaux de compagnie selon l'une quelconque des revendications 1 à 10, dans laquelle la couche absorbante et la feuille de couverture du côté arrière (24) sont intégralement collées ensemble par un adhésif scellable à chaud (53).

**12.** Feuille (10) pour animaux de compagnie selon l'une quelconque des revendications 1 à 11, dans laquelle la feuille de couverture du côté arrière (24) et la feuille arrière (40) sont intégralement collées ensemble par un adhésif scellable à chaud (54).

FIG. 1

FIG. 2

FIG. 3

FIG. 4

## FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11332413 A

- WO 2011121682 A